# EUROPEAN PATENT SPECIFICATION

(11) **EP 1 829 646 B1**
(45) Date of publication and mention of the grant of the patent: **03.12.2008**
(21) Application number: 07004208.0
(22) Date of filing: 01.03.2007
(51) Int. Cl.: B24C 3/04, B24C 9/00

(54) **Shot self-cleaning system for shot-blasting machines**
Strahlgut-Reinigungssystem für Sandstrahlmaschinen
Système de purification de grenailles abrasives pour machine à jet de sable

(30) Priority: 01.03.2006 ES 200600496
(43) Date of publication of application: 05.09.2007
(73) Proprietor: Talleres Alju, S.L., 48510 Valle de Trapaga Vizcaya (ES)
(72) Inventor: Diez, Victoriano Perez, 48510 Valle de Trapaga (Vizcaya) (ES)
(74) Representative: Arends, William Gerrit

(56) References cited:
- DE-A1- 2 158 841
- JP-A- 2002 210 658

## Description

### SCOPE OF THE INVENTION

The invention relates to a shot self-cleaning system for shot-blasters that use metal shot, consisting of: a first bin that stores the shot, a first dosing valve, a turbine (or a compressed-air chamber equipped with a launching nozzle) that receives a dose of shot through the first dosing valve, and projects it with great kinetic energy inside a shot-blasting cabin wherein are placed the parts that are to be treated, a hopper that collects the shot together with the grime and moisture removed by it, a bucket elevator that conveys the used shot through some cleaning media where, via a suction tube and with the aid of magnetic separators and/or air currents, an attempt is made to separate the grime from the shot so that the latter can be reused, a pipe which, via a shot-recirculation valve, connects the first bin with the hopper, and a control system that controls the process. Shot-blasting machines are used in a large proportion of manufacturing processes to eliminate moisture and grime in the form of dust and grease from the surface of parts that are then meant to be painted or to undergo some subsequent surface-finish operation requiring a perfectly clean surface, to wit, for example: products of printing operations exhibiting a greasy surface; those of forging operations exhibiting the "scale" characteristic; products sawn with "cutting fluid"; injection-moulded or die-moulded products which, in order to be removed from the mould, require the use of substances that stain the surface of the parts produced; the mere handling of the parts, or their presence in greasy and/or dusty environments.

The metal shot is composed of hard, very dense little balls, so as to effectively remove the surface impurities from the pieces being treated, and so as to facilitate the suctioning off of the impurities from the shot without dragging the shot into the operation as well.

### STATE OF THE PRIOR ART

In order for the shot to perform its task effectively, it needs to be very clean and dry, so that it exhibits what in the jargon of this technology is called adequate "fluidity".

This is not, however, what actually occurs. Quite to the contrary, what happens is that the pieces that are to undergo the shot-blasting operation arrive to a greater or lesser extent impregnated with grease, water, liquid substances and solid parts which, if not subjected to a prior degreasing and drying operation, would contaminate the shot balls and cause them to lump up. The mere fact of having to carry out the said prior operation is the reason for an increase in the costs of the overall parts-production process, as well a major expenditure of time resulting in a drop in production capacity.

On the other hand, the aforementioned operation must be carried out with care. Unfortunately, this does not happen very often; to the contrary, owing to a lack of care taken, or hastiness, or lack of coordination, the parts very often wind up in the work cabin of the shot-blaster with grease, moisture or another type of grime jeopardising the proper functioning of the machine. In short, nowadays it is usual for these machines to work in conditions that are very far from ideal, as a consequence of which the shot becomes contaminated and produces lumps that behave like firm welds on the little shot balls (their diameters fluctuate between 0.1 and 3mm) among themselves and in terms of the actual structure of the machine, since the fineness of the shot allows it to slip through any cracks and accumulate both on the outside and the inside, causing malfunctions (obstructions or blockages of moving parts) and, very often, the breakdown of the machine, with all that this implies in terms of costs, a drop in production, and customer-service failures.

A system according to the preamble of claim 1 is known from document JP-2002-210658.

### EXPLANATION OF THE INVENTION AND ADVANTAGES

Faced with this state of affairs, the present invention relates to a shot-blasting machine of the sort that use metal shot and that consist of: a first bin that stores the shot, a first dosing valve, a turbine (or a compressed-air chamber equipped with a launching nozzle) that receives a dose of shot through the first dosing valve and projects it with great kinetic energy inside a shot-blasting cabin wherein are placed the parts that are to be treated, a hopper that collects the shot together with the grime and moisture removed by it, a bucket elevator that conveys the used shot through some cleaning media where, via a suction tube and with the aid of magnetic separators and/or air currents, an attempt is made to separate the grime from the shot so that the latter may be reused, a pipe which, via a shot-recirculation valve, connects the first bin with the hopper, and a control system that controls the process.

Within this general set-up, the essential object of the invention consists in the existence of a second bin that stores a granulated absorbent product capable of absorbing grease and moisture, and which, via a second dosing valve, is connected with the said hopper. In this recommended set-up, it is established that: the opening and closing of the second dosing valve is governed by the control system; the suction tube is equipped with a control valve whose opening and closing is governed by the control system; the said second bin incorporates a minimum-level detector for the granulated absorbent product. As for the control valve, it is important to note that in the known machines, it is a simple manually actuated butterfly-type valve, known in the jargon as a "cortatiros" (literally shot cut-off).

The benefits of this simple set-up are of great importance, inasmuch as they are going to permit a functioning mode in which it is possible to establish two operating cycles: one, being the actual work cycle in which the shot is projected against the parts placed within the cabin of the machine; the other being a shot-cleaning cycle to remove the contamination which the shot may have acquired during the work cycle, and to recover the necessary fluidity to effectively carry out another work cycle. The advantages obtained from this are obvious in comparison with the current situation: a saving of the previous operations for cleaning the parts before their insertion in the shot-blasting cabin; a saving of costs owing to the elimination of the said previous operations, and owing to the reduced changing of the used shot; an absence of machine stoppages (for repair or cleaning), which have a major negative impact on productivity and on the reliability and quality of customer service; and of course, an effective job of uniform quality.

To carry out the aforementioned work cycle, the control system is capable of establishing a functioning mode in which the first dosing valve and the control valve of the suction tube are open at the same time as the said shot-recirculation valve and the said second dosing valve are closed. The shot projected by the turbine does its work on the parts placed in the cabin, and afterwards passes to the hopper; the bucket elevator moves it (together with the grime) through the cleaning media which, by suction and/or magnetism, pick up the portion in suspension of the grime removed from the parts. In the current machines, this shot returns to the first bin to be used in a new work cycle; the time taken to load the parts into the cabin is used to open the recirculation valve and to try to ensure that a bit more of the contamination adhering to the shot comes off of it and is eliminated via the aforementioned cleaning media; but this is far from being effective enough to stop the shot from being seriously contaminated, and very far from the conditions of fluidity that ensure an effective job.

In order to perform the automatic cleaning cycle that is the essential contribution of this invention, the control system is capable of establishing a functioning mode in which the said first and second dosing valves and the said control valve are closed at the same time as the said shot-recirculation valve is open. This cleaning cycle is carried out before the work cycle, while the operations of unloading and reloading parts into the cabin of the machine are being performed, and takes place as follows: with the control valve closed and the recirculation valve open, the second dosing valve is opened and a dose of granulated absorbent product is poured into the hopper; then, by means of the bucket elevator, the mixture of shot and absorbent product is made to recirculate for a short time, but sufficiently long for this mixture to become homogeneous; the recirculation valve is now closed, and the first dosing valve is opened, initiating the aforementioned work cycle, which now, because of the invention, has the special feature of the shot hitting against the pieces, but also against the grains of the absorbent product, which as a result are crushed, thereby enormously increasing their active surface, and hence their grease- and moisture-absorbing capacity; then, at a given point in the work cycle, the control valve of the suction tube is opened, and the absorbent product is removed by the cleaning system via air and/or magnetism with the absorbed contamination, leaving the shot in the state of cleanliness providing the proper fluidity for it to continue working effectively. Note that the function now assigned to the pipe controlled by the recirculation valve is different from that performed in known shot-blasting machines.

Another special feature of the invention is that the control system is capable of triggering an acoustic and/or optical warning upon receipt of a signal transmitted by the minimum level detector for the granulated absorbent product.

An interesting advantageous feature of the invention is that it can easily be adapted in conventionally built shot-blasting machines that are already in service.

It is also interesting to note, although it may appear obvious, that the achieved cleaning is not only limited to the shot, but rather the beneficial result also extends to the filters and pipes of the machine, as well as to its exterior; in short, maintenance of the machine is reduced for two reasons: because it receives less staining, and because the accumulation of shot is not compacted to the point of welding described above, and it is therefore easier and quicker to clean.

### DRAWINGS AND REFERENCES

In order that the nature of the invention may be better understood, we depict in the attached drawings an industrial embodiment that is only provided as an illustrative, non-limiting example.

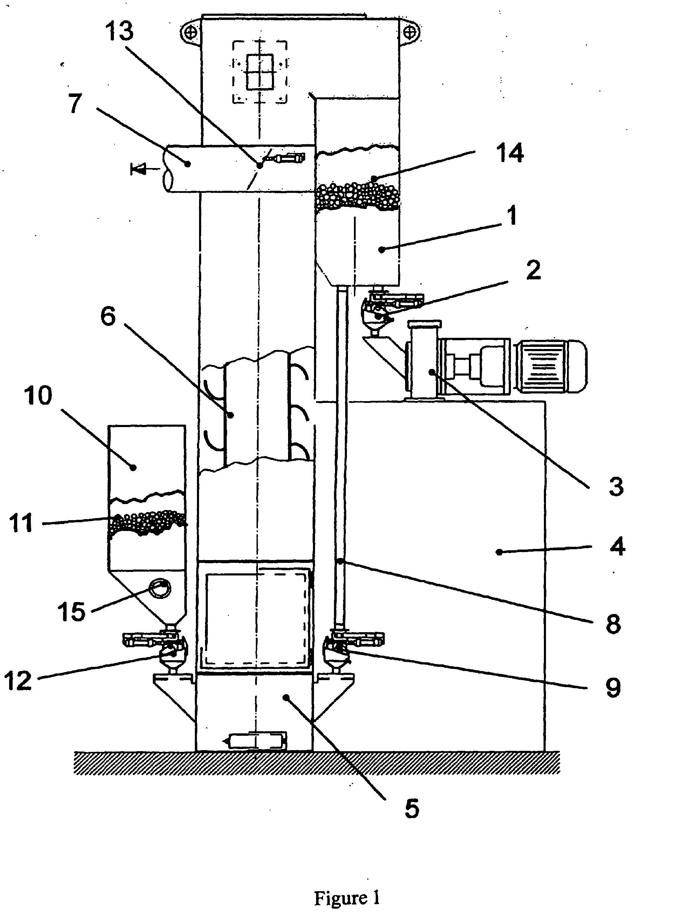

Figure 1 shows schematically a general elevation of a shot-blasting machine constituted according to the invention.

The following references are shown in this figure:
1. First bin
2. First dosing valve
3. Turbine
4. Cabin
5. Hopper
6. Bucket elevator
7. Suction tube
8. Pipe
9. Recirculation valve
10. Second bin
11. Granulated absorbent product
12. Second dosing valve
13. Control valve
14. Shot
15. Minimum-level detector in second bin (10)

### ILLUSTRATION OF A PREFERRED EMBODIMENT

With regard to the drawings and references listed above, the attached plans illustrate a preferred embodiment of the object of the invention, concerning a shot-blaster of the sorts that use metal shot and which, as illustrated by Figure 1, comprise: a first bin (1) that stores the shot (14), a first dosing valve (2), a turbine (3) (or a compressed-air chamber equipped with a launching nozzle) that receives a dose of shot (14) via the first dosing valve (2) and projects it with great kinetic energy inside a shot-blasting cabin (4) in which are placed the parts that are to be treated, a hopper (5) that collects the shot (14) together with the grime and moisture removed by it, a bucket elevator (6) that conveys the used shot (14) through some cleaning media where, via a suction tube (7) and with the aid of magnetic separators and/or air currents to separate the grime from the shot (14) so that the latter can be reused, a pipe (8) which, via a shot(14)-recirculation valve (9) connects the first bin (1) with the hopper (5), and a control system that controls the process. In this general known set-up, the object of the present invention consists in incorporating a second bin (10) which stores a granulated absorbent product (11) capable of absorbing grime and moisture, and which is connected with the said hopper (5) via a second dosing valve (12). In conjunction with this, the invention provides for automation of the process, with better use of the control system and a different use of the pipe (8), which until now has only been used to recirculate contaminated shot (14), with the object of cleaning it as best as possible: an object that was not achieved, since no product capable of eliminating grime and moisture from the shot was used. To such an end, the following holds true: the opening and closing of the second dosing valve (12) is governed by the control system; the suction tube (7) is equipped with a control valve (13) whose opening and closing is governed by the control system; and the said second bin (10) incorporates a minimum-level detector (15) for the granulated absorbent product (11).

With this organisation of means, the control system is capable of establishing a functioning mode in which the said first (2) and second (12) dosing valves and the said control valve (13) are closed at the same time as the said shot (14)-recirculation valve (9) is open, thereby enabling the performance of a specialised, specific cycle to clean the shot (14) of the grease and moisture contaminating it: the aforementioned cleaning cycle which, as has been explained, is begun by adding to this shot (14) a dose of the granulated absorbent product (11) via the automatic opening of the second dosing valve (12) of the second bin (10) in which the said absorbent product is stored; then, with the aid of the bucket elevator (6), a homogeneous mixture of both components is achieved which, in the subsequent work cycle, will be projected by the turbine (3) against the parts placed in the cabin (4) of the shot-blasting machine.

In order to establish the work cycle, the control system is capable of establishing a functioning mode in which the first dosing valve (2) and the control valve (13) of the suction tube (7) are open at the same time as the said shot (14)-recirculation valve (9) and the said second dosing valve (12) are closed; with the result that the work cycle is performed as usual as regards the circulation of the flow of active material, but with the special feature characteristic of the invention that now it is the said homogeneous mixture that impacts against the parts, at the same time as the two components of the mixture impact among themselves. The result is the aforementioned one: to wit, the grains of the absorbent product (11) are broken down, thereby increasing their grease- and moisture-absorption capacity, and achieving great effectiveness in the undertaken cleaning, to the extent that the used shot (14), now in possession of the proper fluidity, is in the perfect state to be reused.

Another special feature of the invention consists in that the control system is capable of triggering an acoustic and/or optical warning upon receipt of a signal transmitted by the minimum-level detector (15) for the granulated absorbent product (11). This device serves to warn the operative in charge of the machine to refill the second bin (10) with the granulated absorbent product (11).

## Claims

1. Shot self-cleaning system for shot-blasting machines, in particular for shot-blasters using metal shot, the system consisting of: a shot blasting cabin, a first bin (1) that stores the shot (14), a first dosing valve (2), a turbine (3) or a compressed-air chamber equipped with a launching nozzle that receives a dose of shot (14) through the first dosing valve (2) and projects it with great kinetic energy inside the shot-blasting cabin (4) wherein are placed the parts that are to be treated, a hopper (5) that collects the shot (14) together with the grime and moisture removed by it, a bucket elevator (6) that conveys the used shot (14) through some cleaning media where, via a suction tube (7) and with the aid of magnetic separators and/or air currents to separate the grime from the shot (14) so that the latter can be reused, a pipe (8) which, via a shot (14)-recirculation valve (9), connects the first bin (1) with the hopper (5), and a control system that controls the process, **characterised in that** there exists a second bin (10) that stores an absorbent granulated product (11) capable of absorbing grease and moisture, and **in that** this second bin (10) is connected with the said hopper (5) via a second dosing valve (12), the control system being capable of establishing a functioning mode in which the said first and second dosing valves and the said control valve are closed at the same time as the said shot-recirculation valve is open.

2. Shot self-cleaning system for shot-blasting machines according to Claim 1, **characterised in that** the opening and closing of the second dosing valve (12) is governed by the control system.

3. Shot self-cleaning system for shot-blasting machines according to any of the previous claims, **characterised in that** the suction tube (7) is equipped with a control valve (13) whose opening and closing is governed by the control system.

4. Shot self-cleaning system for shot-blasting machines according to any of the previous claims, **characterised in that** the said second bin (10) incorporates a minimum-level detector (15) for the absorbent granulated product (11).

5. Shot self-cleaning system for shot-blasting machines according to any of the previous claims, **characterised in that** the control system is capable of establishing a functioning mode in which the said first (2) and second (12) dosing valves, and the said control valve (13) are closed at the same time as the said shot (14)-recirculation valve (9) is open.

6. Shot self-cleaning system for shot-blasting machines according to any of Claims 1 to 4, **characterised in that** the control system is capable of establishing a functioning mode in which the first dosing valve (2) and the control valve (13) of the suction tube (7) are open at the same time as the said shot (14)-recirculation valve (9) and the said second dosing valve (12) are closed.

7. Shot self-cleaning system for shot-blasting machines according to any of the previous claims, **characterised in that** the control system is capable of triggering an acoustic and/or optical warning upon receipt of a signal transmitted by the minimum-level detector (15) for the absorbent granulated product (11).

## Patentansprüche

1. Strahlgut-Selbstreinigungssystem für Sandstrahlmaschinen, insbesondere für Metallstrahlgut verwendende Sandstrahler, wobei das System besteht aus: einem Strahlgutgebläse, einem ersten Behälter (1), der das Strahlgut (14) speichert, einem ersten Dosierventil (2), einer Turbine (3) oder einer Druckluftkammer, die mit einer Abschussdüse ausgestattet ist, die eine Dosierung Strahlgut (14) durch das erste Dosierventil (2) erhält und sie mit großer kinetischer Energie in das Strahlgutgebläse (4) projiziert, in der die zu behandelnden Teile angeordnet sind, einem Trichter (5), der das Strahlgut (14) zusammen mit dem Schmutz und der Feuchtigkeit sammelt, die durch dieses entfernt wurden, ein Becherkettenförderer (6), der das gebrauchte Strahlgut (14) durch irgendwelche Reinigungsmedien über ein Saugrohr (7) und mit der Hilfe von Magnetabscheidern und/oder Luftströmungen fördert, um den Schmutz von dem Strahlgut (14) zu trennen, so dass Letzteres wieder verwendet werden kann, einer Rohrleitung (8), die über ein Strahlgut (14)-Rückführungsventil (9) den ersten Behälter (1) mit dem Trichter (5) verbindet, und einem den Ablauf steuernden Steuersystem,
**dadurch gekennzeichnet, dass** ein zweiter Behälter (10) vorhanden ist, der ein absorbierendes granuliertes Produkt (11) speichert, das in der Lage ist, Schmiere und Feuchtigkeit zu absorbieren, und **dadurch**, dass dieser zweite Behälter (10) mit dem Trichter (5) über ein zweites Dosierventil (12) verbunden ist, wobei das Steuersystem in der Lage ist, einen Ablaufmodus zu erstellen, in dem das erste und zweite Dosierventil und ein Steuerventil zur gleichen Zeit geschlossen sind, wie das Strahlgut-Rückführungsventil geöffnet ist.

2. Strahlgut-Selbstreinigungssystem für Sandstrahlmaschinen nach Anspruch 1, **dadurch gekennzeichnet, dass** das Öffnen und Schließen des zweiten Dosierventils (12) durch das Steuersystem geregelt ist.

3. Strahlgut-Selbstreinigungssystem für Sandstrahlmaschinen nach einem der vorstehenden Ansprüche, **dadurch gekennzeichnet, dass** das Saugrohr (7) mit einem Steuerventil (13) ausgestattet ist, dessen Öffnen und Schließen durch das Steuersystem geregelt ist.

4. Strahlgut-Selbstreinigungssystem für Sandstrahlmaschinen nach einem der vorstehenden Ansprüche, **dadurch gekennzeichnet, dass** der zweite Behälter (10) einen Untergrenzendetektor (15) für das absorbierende granulierte Produkt (11) enthält.

5. Strahlgut-Selbstreinigungssystem für Sandstrahlmaschinen nach einem der vorstehenden Ansprüche, **dadurch gekennzeichnet, dass** das Steuersystem in der Lage ist, einen Ablaufmodus zu erstellen, in dem das erste (2) und zweite Dosierventil (12) und das Steuerventil (13) zur gleichen Zeit geschlossen sind, wie das Strahlgut (14)-Rückführungsventil (9) geöffnet ist.

6. Strahlgut-Selbstreinigungssystem für Sandstrahlmaschinen nach einem der Ansprüche 1 bis 4, **dadurch gekennzeichnet, dass** das Steuersystem in der Lage ist, einen Ablaufmodus zu erstellen, in dem das erste Dosierventil (2) und das Steuerventil (13) des Saugrohrs (7) zur gleichen Zeit geöffnet sind, wie das Strahlgut (14)-Rückführungsventil (9) und das zweite Dosierventil (12) geschlossen sind.

7. Strahlgut-Selbstreinigungssystem für Sandstrahlmaschinen nach einem der vorstehenden Ansprüche, **dadurch gekennzeichnet, dass** das Steuersystem in der Lage ist, nach Eingang eines Signals, das durch den Untergrenzendetektor (15) für das absorbierende granulierte Produkt (11) übertragen wurde, eine akustische und/oder optische Warnung auszulösen.

## Revendications

1. Système d'auto-nettoyage de grenailles pour des machines de sablage, en particulier pour des sableuses utilisant de la grenaille métallique, le système se composant de : une cabine de grenaillage, un premier bac (1) qui stocke la grenaille (14), une première soupape de dosage (2), une turbine (3) ou une chambre à air comprimé équipée d'une buse de projection qui reçoit une dose de grenailles (14) par l'intermédiaire de la première soupape de dosage (2) et la projette avec une énergie cinétique importante à l'intérieur de la cabine de grenaillage (4) dans laquelle sont placées les pièces qui doivent être traitées, une trémie (5) qui recueille la grenaille (14) avec la saleté et l'humidité enlevées par celle-ci, un élévateur à godet (6) qui transporte la grenaille utilisée (14) à travers des agents de nettoyage où, par l'intermédiaire d'un tube d'aspiration (7) et à l'aide de séparateurs magnétiques et/ou des courants d'air, on sépare la saleté de la grenaille (14) de telle sorte que cette dernière peut être réutilisée, un tuyau (8) qui, par l'intermédiaire d'une soupape de recyclage (9) de grenailles (14), relie le premier bac (1) à la trémie (5), et un système de commande qui commande le processus, **caractérisé en ce qu'**il y a un deuxième bac (10) qui stocke un produit granulé absorbant (11) capable d'absorber la graisse et l'humidité, et **en ce que** ce deuxième bac (10) est relié à ladite trémie (5) par l'intermédiaire d'une deuxième soupape de dosage (12), le système de commande étant capable d'établir un mode de fonctionnement dans lequel lesdites première et deuxième soupapes de dosage et ladite soupape de commande sont fermées en même temps que ladite soupape de recyclage de grenailles est ouverte.

2. Système d'auto-nettoyage de grenailles pour des machines de sablage selon la revendication 1, **caractérisé en ce que** l'ouverture et la fermeture de la deuxième soupape de dosage (12) sont contrôlées par le système de commande.

3. Système d'auto-nettoyage de grenailles pour des machines de sablage selon l'une quelconque des revendications précédentes, **caractérisé en ce que** le tube d'aspiration (7) est équipé d'une soupape de commande (13) dont l'ouverture et la fermeture sont contrôlées par le système de commande.

4. Système d'auto-nettoyage de grenailles pour des machines de sablage selon l'une quelconque des revendications précédentes, **caractérisé en ce que** le dit deuxième bac (10) comporte un détecteur de niveau minimum (15) pour le produit granulé absorbant (11).

5. Système d'auto-nettoyage de grenailles pour des machines de sablage selon l'une quelconque des revendications précédentes, **caractérisé en ce que** le système de commande est capable d'établir un mode de fonctionnement dans lequel lesdites première (2) et deuxième (12) soupapes de dosage, et ladite soupape de commande (13) sont fermées en même temps que ladite soupape de recyclage (9) de grenailles (14) est ouverte.

6. Système d'auto-nettoyage de grenailles pour des machines de sablage selon l'une quelconque des revendications 1 à 4, **caractérisé en ce que** le système de commande est capable d'établir un mode de fonctionnement dans lequel la première soupape de dosage (2) et la soupape de commande (13) du tube d'aspiration (7) sont ouvertes en même temps que ladite soupape de recyclage (9) de grenailles (14) et ladite deuxième soupape de dosage (12) sont fermées.

7. Système d'auto-nettoyage de grenailles pour des machines de sablage selon l'une quelconque des revendications précédentes, **caractérisé en ce que** le système de commande est capable de déclencher une alarme acoustique et/ou optique à la réception d'un signal transmis par le détecteur de niveau minimum (15) pour le produit granulé absorbant (11).
